# EUROPEAN PATENT SPECIFICATION

(11) **EP 2 385 743 B1**
(45) Date of publication and mention of the grant of the patent: **10.08.2016**
(21) Application number: 09837300.4
(22) Date of filing: 26.06.2009
(51) Int. Cl.: H04W 36/00, H04W 36/18, H04W 36/28, H04W 76/00, H04W 76/02, H04W 92/12, H04W 4/06, H04W 36/10

(54) **METHOD, SYSTEM AND DRNC FOR TRANSPORTING CELL CAPACITY BY CROSSING IUR INTERFACE**
VERFAHREN, SYSTEM UND DRNC FÜR ZELLKAPAZITÄTSTRANSPORT MITTELS KREUZENDER IUR-SCHNITTSTELLE
PROCÉDÉ, SYSTÈME ET CONTRÔLEUR DE RÉSEAU RADIO RELAIS POUR TRANSPORT DE CAPACITÉ CELLULAIRE PAR TRAVERSÉE DE L'INTERFACE IUR

(30) Priority: 29.12.2008 WO PCT/CN2008/073825
(43) Date of publication of application: 09.11.2011
(73) Proprietor: ZTE Corporation, Shenzhen, Guangdong 518057 (CN)
(72) Inventor: XIAO, Shuchao, Shenzhen Guangdong 518057 (CN)
(74) Representative: Gervasi, Gemma
(86) International application number: PCT/CN2009/072489
(87) International publication number: WO 2010/078742

(56) References cited:
- WO-A1-2005/006596
- WO-A1-2006/085721
- CN-A- 1 534 912
- CN-A- 1 694 546
- CN-A- 1 774 121
- CN-A- 1 839 655
- CN-A- 101 009 644
- US-A1- 2005 213 541
- US-A1- 2007 099 664

## Description

### Technical Field

The present invention relates to the communication field, and particularly, to a method, system and Drift Radio Network Controller (DRNC) for transferring a cell capability across an Iur interface.

### Background of the Related Art

The Wideband Code Division Multiple Access (WCDMA) technique is adopted by more and more operators in the worldwide, and every operator has its own specific requirements. Compared with the voice service, since the video call service occupies more radio resources, transmission bandwidth and so on, operators wish to decide whether a certain cell is allowed to call and switch into a video call according to the practical environment. For example, in the large coverage cells, such as the suburb, coast and so on, operators wish to forbid the video call in these cells for admitting more voice services.

The Serving Radio Network Controller (SRNC) knows whether the cell controlled by the SRNC itself allows the video call service, but the SRNC does not know whether the cell controlled by the DRNC allows the video call service, which is due to the DRNC being unable to transfer the information about this cell capability through the Iur interface.

Besides, in the AUDIT REPONSE and RESOURCE STATUS INDICATION messages of the Iub interface, the NodeB can notify the RNC of the Multimedia Broadcast Multicast Service (MBMS) supporting capability of the cell, but the DRNC does not have the similar mechanism to notify the SRNC of the MBMS supporting capability of the cell.

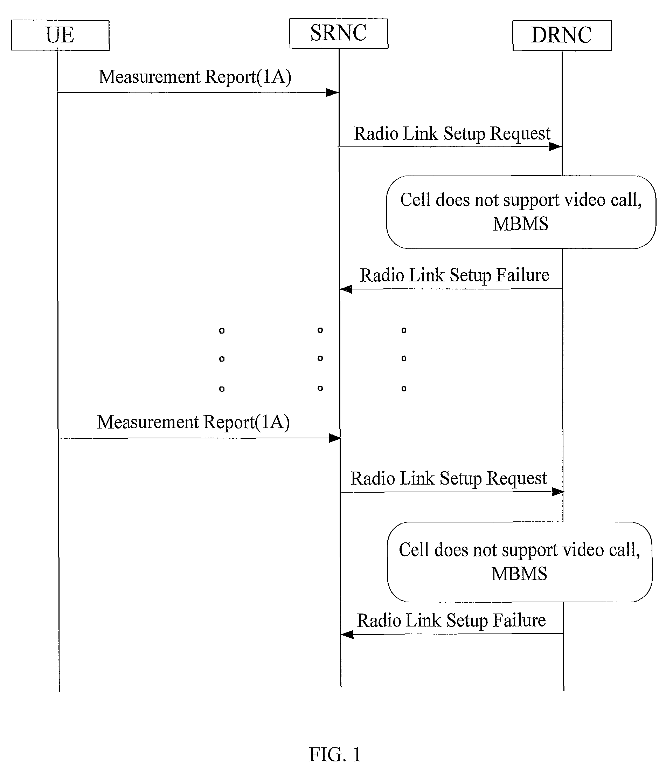

When the User Equipment (UE)'s current services include the video call service or the MBMS service, since the SRNC does not know the cell capabilities in DRNC side, the SRNC may make a wrong decision of the soft adding (referring to adding one link by soft switch) a DRNC side cell, and a flow of repeated tries easily appears. As shown in FIG. 1, the UE sends a measurement report of which the content is that the cell controlled by the DRNC (a DRNC cell) satisfies the condition of the 1A event to the SRNC, and the SRNC tries to add this cell into the active set, and sends a radio link setup message to the DRNC. Since this cell does not allow the video call service or does not support the MBMS service, thus the radio link setup fails, and the DRNC returns a radio link setup failure message to the SRNC; and because the SRNC does not know the cause why the radio link setup fails is that this cell does not allow the video call service or does not support the MBMS service, so when the UE sends the measurement report of this cell to the SRNC over again, the SRNC sends a radio link setup message to the DRNC over again, and repeats a try.

The above drawback will obviously affect the user experience, and even causes the handoff to be not in time to result in call dropping. For a scenario that the active set has had the DRNC side cell, setting up video call or the MBMS service may result in an unnecessary flow of the radio link reconfiguration failure of the Iur interface. The above redundant flows resulted by not knowing the DRNC side cell capabilities increase the processing load of the SRNC, increase the time delay, and make the SRNC miss the best processing opportunity, and indirectly decrease the SRNC capability.

In the 3GPP R7 protocol standard, the failure cause values of the Iur interface includes: the invalid cell ID, power level not supported, invalid compression mode parameter, downlink shared channel type not supported, enhanced uplink dedicated channel not supported, and so on. The cell capabilities transferred across the Iur interfaces are denoted by 32 bits, each bit represents one cell capability, 1 denotes "supported", and 0 denotes "not supported". For example, the 3rd bit denotes the high speed downlink shared channel supported indication, and the 17th bit denotes the multiple antennae receiving and multiple antennae sending supported indication. However, both the failure cause values and the cell capabilities do not include definitions of the two capabilities of video call and MBMS.

US 2005/213541 A1 (JUNG MYUNG-CHEUL et al.) published on 29 September 2005 relates to a method for transmitting service information between network nodes in a wireless system providing one or more multimedia broadcast/multicast service (MBMS).

Documents US2007/0099664 A1 and WO 2005/006596 A1 disclose other examples of the prior art.

### Summary of the Invention

The technical problem to be solved in the present invention is to solve the problem existing in the prior art that the video call service capability and the MBMS supporting capability across a Iur interface cannot be transferred, and to provide a method and a system for transferring a cell capability across an Iur interface, and a DRNC according to claims 1, 4 and 7 respectively, which facilitates the SRNC to make a more suitable decision according to the requirement after knowing the cell capability of the DRNC.

In order to solve the above problem, the present invention provides a method for transferring a cell capability across an Iur interface, comprising:
since a cell controlled by a Drift Radio Network Controller (DRNC) does not allow a video call service, or does not support a Multimedia Broadcast Multicast Service (MBMS) service, and thus when the DRNC is required to return a failure message to a Serving Radio Network Controller (SRNC), the DRNC writing a failure cause into said failure message, and sending the failure message to the SRNC; and/or
the DRNC writing video call service capability indication information and/or MBMS service supporting capability indication information of the cell controlled by this DRNC into an indication message or a response message, and sending the indication message or the response message to the SRNC.

Furthermore, the above method may have the following features:
the failure message includes a radio link setup failure message, a radio link addition failure message and a radio link reconfiguration failure message.

Furthermore, the above method may have the following features:
the DRNC writing the failure cause into said failure message refers to: the DRNC writing information of not allowing the video call service or not supporting the MBMS capability into a cause information element of the failure message.

Furthermore, the above method may have the following features:
said indication message refers to an uplink signaling transfer indication message; and said response message includes a radio link setup response message and a radio link addition response message.

Furthermore, the above method may have the following features:
said DRNC writing video call service capability indication information and/or MBMS service supporting capability indication information of the cell controlled by this DRNC into an indication message or a response message refers to: the DRNC writing the video call service capability indication information and/or the MBMS service supporting capability indication information of the cell controlled by this DRNC into a Cell Capability Container Frequency Division Duplex (FDD) information element of the indication message or the response message.

Furthermore, the above method may have the following features:
after the SRNC obtains the video call service capability indication information of the cell controlled by the DRNC, if User Equipment (UE)'s current services include the video call service, and the UE sends a measurement report of which the content is a cell of the DRNC satisfies a condition of a 1D event to the SRNC but does not allow the video call service, the SRNC initiating a process of the video call service falling back to a voice service.

Furthermore, the above method may have the following features:
after the SRNC obtains the video call service capability indication information of the cell controlled by the DRNC, if a UE's current active set includes the cell not allowing the video call service or the MBMS service and a core network orders to set up a video call service or a MBMS service, the SRNC immediately returning a setup failure to the core network.

In order to solve the above problem, the present invention also provides a system for transferring a cell capability across an Iur interface, this system comprises a DRNC and a SRNC, wherein:
since a cell controlled by a DRNC does not allow a video call service or does not support a MBMS service, when the DRNC is required to return a failure message to the SRNC, said DRNC is used for writing a failure cause into said failure message, and sending the failure message to the SRNC;
said DRNC is used for writing video call service capability indication information and/or MBMS service supporting capability indication information of the cell controlled by this DRNC into an indication message or a response message, and sending the indication message or the response message to the SRNC;
said SRNC is used for obtaining the information of the video call service capability and/or the MBMS service supporting capability according to the failure cause in said failure message and according to the video call service capability indication information and/or the MBMS service supporting capability indication information in the indication message or the response message.

In order to solve the above problem, the present invention also provides a DRNC.
since a cell controlled by the DRNC does not allow a video call service or does not support a MBMS service, when the DRNC is required to return a failure message to a SRNC, said DRNC is used for writing a failure cause into said failure message, and sending the failure message to the SRNC; and/or
said DRNC is used for writing video call service capability indication information and/or MBMS service supporting capability indication information of the cell controlled by this DRNC into an indication message or a response message, and sending the indication message or the response message to the SRNC.

According to said method and system of the present invention, the SRNC can know the video call service capability and the MBMS service supporting capability of the DRNC side cell in advance to avoid the redundant failure processes. When the UE's current services include the video call service or the MBMS service, if the DRNC side cell does not allow the video call service, or does not support the MBMS service, and when the UE reports the 1A/1C events according to the DRNC side cell, the SRNC immediately make a decision of not softly adding DRNC side cell. When the UE reports the 1D event according to the DRNC side cell, the video call can fall back to the common voice at first, and then is softly added, which improves the user experience, and avoids dropping a call caused by the handoff being not in time, and especially in a scenario of the UE moving at a high speed.

In the case that the active set has had the DRNC side radio link, when the video call service or the MBMS service is set up, if it is known in advance that the DRNC side cell does not allow the video call service or the MBMS service, a setup failure message can be returned immediately without waiting for the radio link reconfiguration failure message returned by the DRNC side, which avoids the inefficient try: the SRNC side allocates resources, the DRNC returns a reconfiguration failure message, and the SRNC releases resources, thus the SRNC processing load is reduced, and the SRNC has more time and resources to respond to other users' request, and thereby increasing the SRNC capability.

### Brief Description of Drawings

FIG. 1 is a flow chart of the SRNC not knowing the video call service capability and the MBMS service supporting capability of the DRNC side cell and repeatedly trying the soft adding in the prior art;
FIG. 2 is a flow chart of the SRNC knowing the video call service capability and the MBMS service supporting capability of the DRNC side cell by a radio link setup failure message of the Iur interface;
FIG. 3 is a flow chart of the SRNC knowing the video call service capability and the MBMS service supporting capability of the DRNC side cell by a radio link addition failure message of the Iur interface;
FIG. 4 is a flow chart of the SRNC knowing the video call service capability and the MBMS service supporting capability of the DRNC side cell by a radio link reconfiguration failure message of the Iur interface;
FIG. 5 is a flow chart of the SRNC knowing the video call service capability and the MBMS service supporting capability of the DRNC side cell by an uplink signaling transfer indication message of the Iur interface;
FIG. 6 is a flow chart of the SRNC knowing the video call service capability and the MBMS service supporting capability of the DRNC side cell by a radio link setup response message of the Iur interface;
FIG. 7 is a flow chart of the SRNC knowing the video call service capability and the MBMS service supporting capability of the DRNC side cell by a radio link addition response message of the Iur interface;
FIG. 8 is a flow chart of the UE's current services including the video call service, while the DRNC cell which does not allow the video call reporting the 1D event to trigger the video call to fall back to the voice service;
FIG. 9 is a flow chart of the UE's current active set including cells not allowing the video call service, the core network ordering to set up the video call and the SRNC immediately returning a failure message;
FIG. 10 is a flow chart of the UE's current active set including cells not allowing the MBMS service, the core network ordering to set up the MBMS service and the SRNC immediately returning a failure message.

### Preferred Embodiments of the Present Invention

The present invention implements transferring of the cell capability across the Iur interfaces by two ways:

### Way one:

Since the DRNC controlled cell does not allow the video call service, or does not support the MBMS service, and thus when the DRNC is required to return a failure message to the SRNC, the DRNC writes the failure cause into said failure message and sends the failure message to the SRNC.

Wherein said MBMS service refers to the Point to Point (PTP) service and the Point to Multipoint (PTM) multicast service of the MBMS.

Said failure message includes but is not limited to the RADIO LINK SETUP FAILURE message, RADIO LINK ADDITION FAILURE message, and RADIO LINK RECONFIGURATION FAILURE message.

Two failure causes are added to the Cause information element in said failure message to indicate that the setup link failure or reconfiguration failure is caused by not allowing the video call service or not supporting the MBMS capability, and the DRNC writes the information of not allowing the video call service or not supporting the MBMS capability into the Cause information element of the failure message, and sends the failure message to the SRNC.

### Way two:

The DRNC writes video call service capability indication information and/or MBMS service supporting capability indication information of the DRNC controlled cell into an indication message or a response message, and sends the indication message or the response message to the SRNC.

Wherein said video call service capability indication information refers to whether the video call service is allowed.

Said MBMS service supporting capability indication information refers to whether the MBMS service is supported.

Said MBMS service refers to the PTP service and PTM multicast service of the MBMS.

Said indication message includes but is not limited to the UPLINK SIGNALING TRANSFER INDICATION message.

Said response message includes but is not limited to the RADIO LINK SETUP RESPONSE message and the RADIO LINK ADDITION RESPONSE message.

The video call service and/or the MBMS service supporting capability of the DRNC controlled cell is denoted by the unused bits in the cell capability container Frequency Division Duplex (FDD) information element of the indication message or the response message, and said DRNC writes the video call service capability indication information and/or the MBMS service supporting capability indication information of the DRNC controlled cell into the cell capability container FDD information element of the indication message or the response message, and sends the indication message or the response message to the SRNC.

In a general case, the above two ways are jointly used. Certainly, it also can only use one way thereof.

Accordingly, the present invention provides a system for transferring the cell capability across the Iur interface, and this system comprises: a DRNC and a SRNC.

Wherein since the DRNC controlled cell does not allow the video call service, or does not support the MBMS service, and thus when the DRNC is required to return a failure message to the SRNC, the DRNC is used for writing the failure cause into said failure message, and sending the failure message to the SRNC; and/or
the DRNC is used for writing video call service capability indication information and/or MBMS service supporting capability indication information of the DRNC controlled cell into an indication message or a response message, and sending the indication message or the response message to the SRNC;
said SRNC is used for obtaining the information of the video call service capability and/or the MBMS service supporting capability of the DRNC controlled cell according to said failure cause in said failure message, and/or the video call service capability indication information and/or MBMS service supporting capability indication information in the indication message or the response message.

Accordingly, the present invention provides a DRNC, and since this DRNC controlled cell does not allow the video call service, or does not support the MBMS service, and thus when the DRNC is required to return a failure message to the SRNC, this DRNC is used for writing the failure cause into said failure message, and sending the failure message to the SRNC; and/or
this DRNC is used for writing the video call service capability indication information and/or MBMS service supporting capability indication information of the DRNC controlled cell into an indication message or a response message, and sending the indication message or the response message to the SRNC;

Below it will describe the technical scheme of the present invention with reference to the figures and examples in detail.

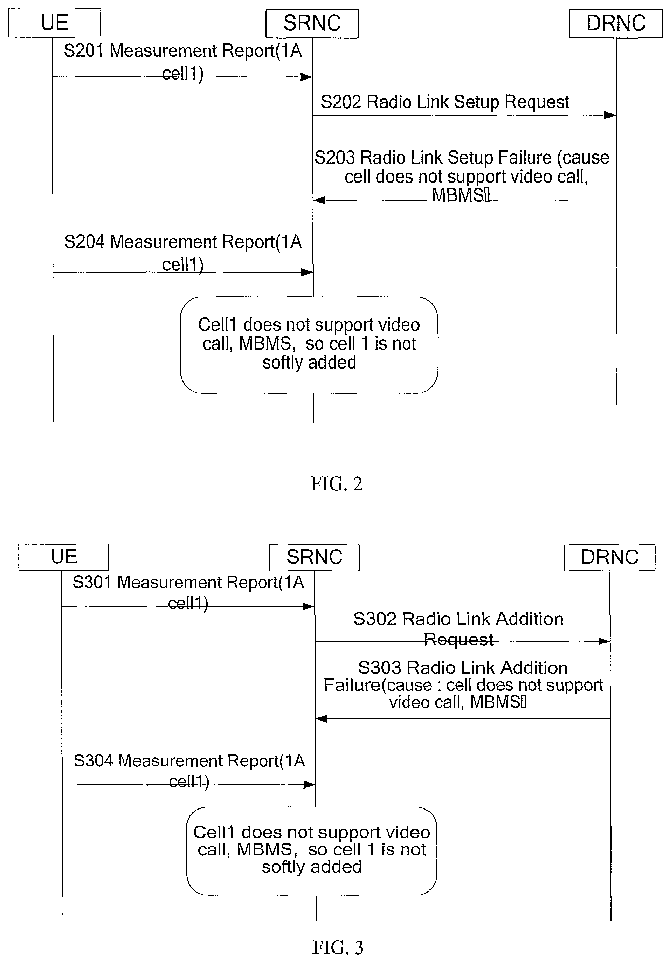

FIG. 2 shows a flow chart of the SRNC knowing the video call service capability or the MBMS service supporting capability of the DRNC side cell by a radio link setup failure message of the Iur interface, wherein the UE's current services include the video call service or the MBMS service, and this flow chart comprises the following steps:
Step S201: the UE sends a measurement report to the SRNC, and the content of the measurement report is the cell1 of the DRNC satisfies the condition of the 1A event;
Step S202: the SRNC does not know the video call service capability and the MBMS service supporting capability of this cell1, and tries to add this cell1 into the active set, since the SRNC and the DRNC have not set up a link therebetween at this time, and thus the SRNC sends a radio link setup message to the DRNC;
Step S203: since the cell1 does not allow the video call service or does not support the MBMS service, thus the radio link setup fails, and the DRNC returns a radio link setup failure message to the SRNC, and this message includes the failure cause (not allowing the video call service or not supporting the MBMS service); and
Step S204: the UE sends a measurement report to the SRNC over again, and the content of the measurement report is the cell1 of the DRNC satisfies the condition of the 1A event; the SRNC finds that this cell1 does not allows the video call service or does not support the MBMS service, and thereby not softly adding this cell1.

FIG. 3 shows a flow chart of the SRNC knowing the video call service capability or the MBMS service supporting capability of the DRNC side cell by a radio link addition failure message of the Iur interface, wherein the UE's current services include the video call service or the MBMS service, and the flow comprises the following steps:
Step S301: the UE sends a measurement report to the SRNC, and the content of the measurement report is that the cell1 of the DRNC satisfies the condition of the 1A event;
Step S302: the SRNC does not know the video call service capability and the MBMS service supporting capability of this cell1, and tries to add this cell1 into the active set, and since the SRNC and the DRNC have set up a link therebetween at this time, if the cell1 is added into the active set, one link should be added, and thus the SRNC sends a radio link addition message to the DRNC;
Step S303: since the cell1 does not allow the video call service or does not support the MBMS service, thus the radio link setup fails, and the DRNC returns a radio link addition failure message to the SRNC, and this message includes a failure cause (not allowing the video call service or not supporting the MBMS service); and
Step S304: the UE sends a measurement report to the SRNC over again, and the content of the measurement report is that the cell1 of the DRNC satisfies the condition of the 1A event; the SRNC finds this cell1 does not allow the video call service or does not support the MBMS service, and thereby not softly adding this cell1.

In the above examples, the UE's current services include the video call service or the MBMS service. However, in the practical applications, the UE's current services can include both the video call service and the MBMS service at the same time, so the failure cause value in the radio link setup failure message or the radio link addition failure message returned to the SRNC by the DRNC can only be the failure cause of the first service.

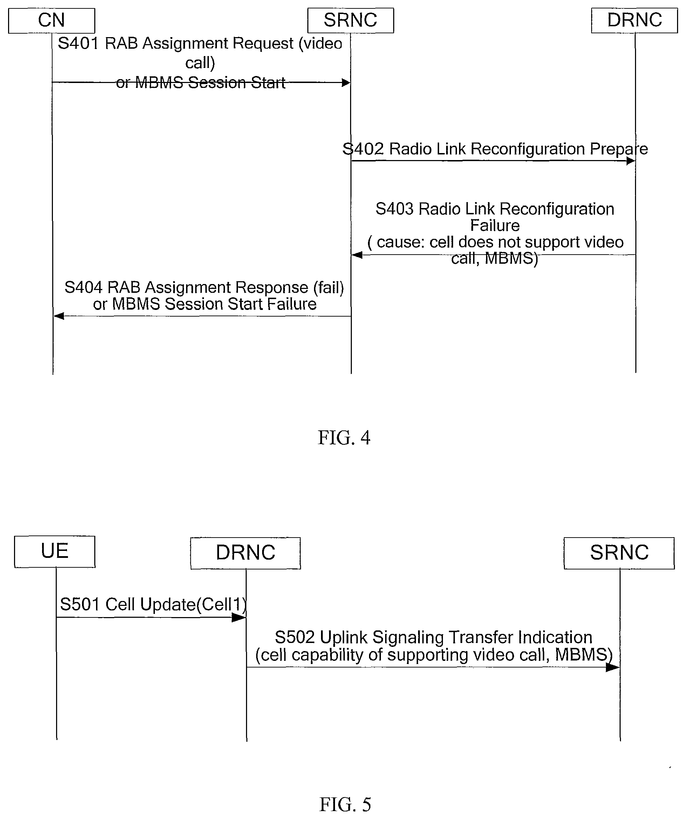

FIG. 4 shows the flow chart of the SRNC knowing the video call service capability or the MBMS service supporting capability of the DRNC side cell by a radio link reconfiguration failure message of the Iur interface, wherein the UE's current active set includes the DRNC cell, and this flow chart comprises the following steps:
Step S401: the Core Network (CN) sends a Radio Access Bearer (RAB) ASSIGNMENT REQUEST message to the RNC to request to set up a video call; or the CN sends a MBMS SESSION START message to the RNC to request to set up a MBMS service;
Step S402: the SRNC does not know the video call service capability and the MBMS service supporting capability of the DRNC cell, and decides to set up a video call service or a MBMS service, and thus sends a radio link reconfiguration preparation message to the DRNC;
Step S403: since the DRNC side cell does not allow the video call service or does not support the MBMS service which causes a radio link reconfiguration failure, and thus the DRNC sends a radio link reconfiguration failure message to the SRNC, and this message includes the failure cause (not allowing the video call service or not supporting the MBMS service); and
Step S404: the SRNC sends a RAB ASSIGNMENT FAILURE RESPONSE message or a MBMS SESSION START FAILURE message to the CN.

FIG. 5 shows a flow chart of the SRNC knowing the video call service capability and/or the MBMS service supporting capability of the DRNC side cell by an uplink signaling transfer indication message of the Iur interface, wherein the UE is in the non CELL_DCH state, and this flow chart comprises the following steps:
Step S501: the UE moves from a SRNC controlled area to a DRNC controlled cell1, and since the UE is in a non CELL_DCH state, the UE sends a CELL UPDATE message to the DRNC; and
Step S502: the DRNC sends an uplink signaling transfer indication message to the SRNC, and notifies the cell change information of the UE to the SRNC. This message includes the capability information of the cell1, and includes said video call service capability indication information and MBMS service supporting capability indication information.

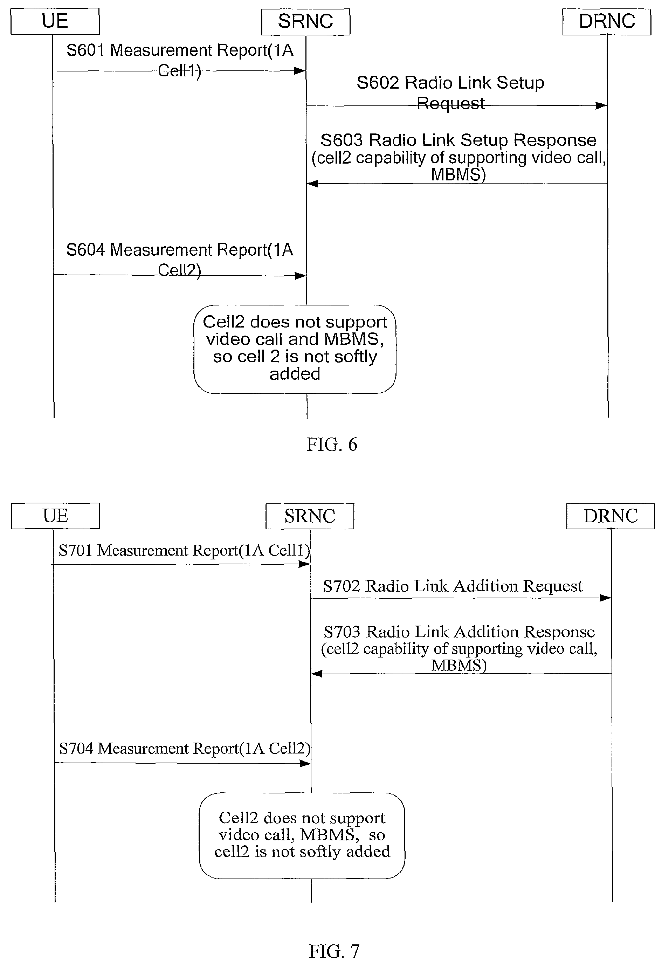

FIG. 6 shows a flow chart of the SRNC knowing the video call service capability and/or the MBMS service supporting capability of the DRNC side cell by a radio link setup response message of the Iur interface, wherein the UE's current services include the video call service or the MBMS service, and this flow chart comprises the following steps:
Step S601: the UE sends a measurement report to the SRNC, the content of the measurement report is the DRNC cell1 satisfies the condition of the 1A event, and this cell1 is the adjacent cell of the SRNC cell;
Step S602: the SRNC decides to add this cell1 into the active set, and sends a radio link setup message to the DRNC;
Step S603: if cell1 supports the video call service or the MBMS service, the DRNC returns a radio link setup response message to the SRNC, wherein the radio link setup response message includes all the adjacent cells information of the cell1, and said adjacent cells information includes the video call service capability indication information and/or the MBMS service supporting capability indication information of said adjacent cells; and
Step S604: the UE sends a measurement report to the SRNC, and the content of the measurement report is the adjacent cell of the cell1, namely the cell2, which satisfies the condition of the 1A event; since the SRNC has obtained the video call service capability indication information and the MBMS service supporting capability indication information of the cell2 from the above radio link setup response message, and if the cell2 does not allow the video call service or does not support the MBMS service, the SRNC does not softly add this cell2.

FIG. 7 shows a flow chart of the SRNC knowing the video call service capability and the MBMS service supporting capability of the DRNC side cell by a radio link addition response message of the Iur interface, wherein the UE's current services include the video call service or the MBMS service, and this flow chart comprises the following steps:
Step S701: the UE sends a measurement report to the SRNC, and the content of the measurement report is the DRNC cell1 satisfies the condition of the 1A event, and the cell1 is an adjacent cell included in the radio link setup response message during the first radio link of the DRNC is set up;
Step S702: the SRNC decides to add the cell1 into the active set, and sends a radio link addition message to the DRNC;
Step S703: the cell1 supports the video call service or the MBMS service, and the DRNC returns a radio link addition response to the SRNC, and the radio link addition response includes all the adjacent cells information of the cell1, and said adjacent cells information includes the video call service capability indication information and/or the MBMS service supporting capability indication information of said adjacent cells; and
Step S704: the UE sends a measurement report to the SRNC, and the content of the measurement report is the adjacent cell of the cell1, namely the cell2, which satisfies the condition of the 1A event; since the SRNC has obtained the video call service capability indication information and MBMS service supporting capability indication information of the cell2 from the above radio link setup response message, and if the cell2 does not allow the video call service or does not support the MBMS service, the SRNC does not softly add this cell2.

In the above examples, the unused 2 bits of the Cell Capability Container FDD information element in the indication message or the response message can be used to denote the video call service and the MBMS service supporting capability of the DRNC controlled cell, and 1 bit denotes one capability; certainly, if the SRNC only needs to obtain one capability thereof, for example, the video call service capability, then the indication message or the response message can only include the information about this capability.

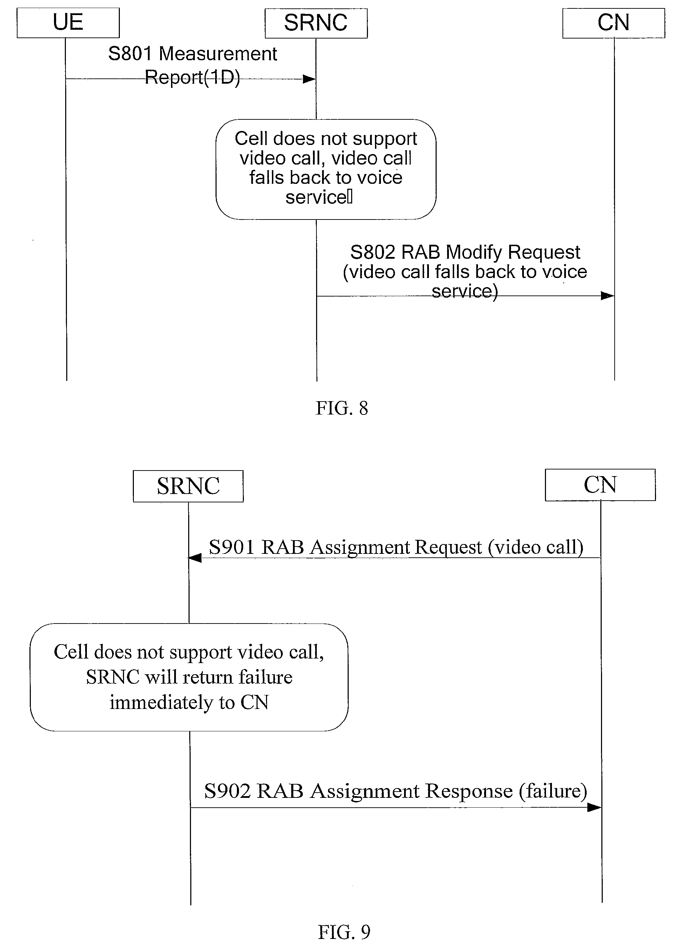

FIG. 8 shows a flow chart of the UE's current services including the video call service, and the UE sending a measurement report (1D event) of the DRNC cell (this cell does not allow the video call service) to the SRNC to trigger the video call service to fall back to the voice service, and this flow chart comprises the following steps:
Step S801: the UE sends a measurement report to the SRNC, and the content of the measurement report is the DRNC cell satisfies the condition of the 1D event; and
Step S802: the SRNC finds this cell does not allow the video call service and the UE's current services include the video call service, and thus decides to fall back the video call service to the voice service, and sends the RAB MODIFICATION REQUEST message to the CN.

And once the falling back succeeds, this DRNC cell can be added into the active set.

FIG. 9 shows a flow chart of the UE's current active set including a cell not allowing the video call service, the core network ordering to set up the video call service and the SRNC immediately returning a failure message, and this flow chart comprises the following steps:
Step S901: the CN sends a RAB ASSIGNMENT REQUEST message to the SRNC, and requests to set up the video call service; and
Step S902: the SRNC finds the current active set includes the cell not allowing the video call, and immediately sends a RAB ASSIGNMENT FAILURE RESPONSE message to the CN.

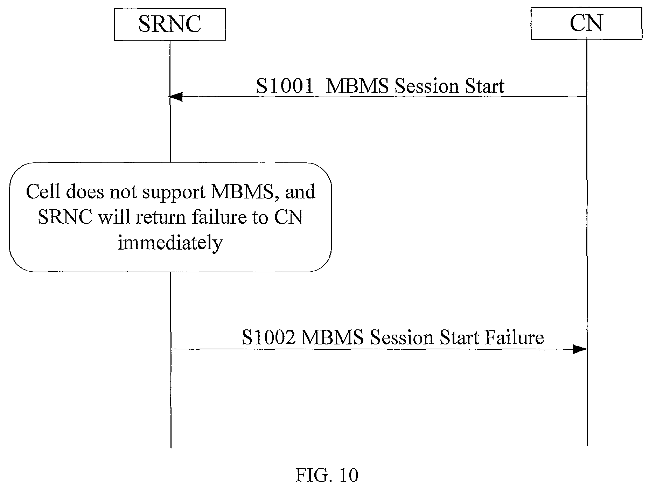

FIG. 10 shows a flow chart of the UE's current active set including a cell not allowing the MBMS service, the core network ordering to set up the MBMS service and the SRNC immediately returning a setup failure message, and this flow chart comprises the following steps:
Step S1001: the CN sends a MBMS SESSION START message to the SRNC, and requests to set up the MBMS service; and
Step S1002: the SRNC finds the current active set includes the cell not allowing the MBMS service, and immediately sends the MBMS SESSION START FAILURE message to the CN.

Although the present invention is described with reference to the particular examples, various corresponding modifications and transformations can be made to the present invention by those having ordinary skills in the art without departing from the scope of the present invention. Such modifications and transformations shall all fall into the protection scope of the present invention according to the appended claims.

### Industrial Applicability

The method and system for transferring a cell capability across an Iur interface solve the problem existing in the prior art that the video call service capability and the MBMS supporting capability cannot be transferred across Iur interfaces, which facilitates the SRNC to make a more suitable decision according to the requirement after knowing the cell capability of the DRNC, and thereby improving the user experience, and avoiding dropping a call caused by handoff being not in time.

## Claims

1. A method for transferring a cell capability across an Iur interface, comprising:
when a User Equipment, UE, which is in a non CELL_DCH state, moves from a Serving Radio Network Controller, SRNC, controlled area to a Drift Radio Network Controller, DRNC, controlled cell, the UE sending a CELL UPDATE message to a DRNC;
the DRNC sending an uplink signaling transfer indication message to a SRNC to notify cell change information of the UE to the SRNC, wherein the uplink signaling transfer indication message includes Multimedia Broadcast Multicast Service, MBMS, service supporting capability indication information of the DRNC controlled cell.

2. The method as claimed in claim 1, wherein
the MBMS service supporting capability indication information is written into a Cell Capability Container Frequency Division Duplex, FDD, information element of the uplink signaling transfer indication message or the radio link setup response message or the radio link addition response message.

3. The method as claimed in claim 1, further comprising:
after the SRNC obtaining the MBMS service supporting capability indication information of the cell controlled by the DRNC, if the current active set of the UE includes a cell not allowing MBMS service and a core network orders to set up MBMS service, said SRNC immediately returning a setup failure message to said core network.

4. A system for transferring a cell capability across an Iur interface, comprising a Drift Radio Network Controller, DRNC, and a Serving Radio Network Controller, SRNC, wherein:
said DRNC is adapted for, when a User Equipment, UE, which is in a non CELL_DCH state, moves from a SRNC controlled area to a DRNC controlled cell, receiving a CELL UPDATE message sent by the UE, and sending an uplink signaling transfer indication message to said SRNC to notify cell change information of the UE to the SRNC, wherein the uplink signaling transfer indication message includes Multimedia Broadcast Multicast Service, MBMS, service supporting capability indication information of the DRNC controlled cell;
said SRNC is adapted for receive the uplink signaling transfer indication message to obtain the MBMS service supporting capability indication information of the DRNC controlled cell.

5. The system as claimed in claim 4, wherein
the MBMS service supporting capability indication information is written into a Cell Capability Container Frequency Division Duplex, FDD, information element of the uplink signaling transfer indication message or the radio link setup response message or the radio link addition response message.

6. The system as claimed in claim 4, said SRNC is further adapted for:
after the SRNC obtaining the MBMS service supporting capability indication information of the cell controlled by the DRNC, if the current active set of the UE includes a cell not allowing MBMS service and a core network orders to set up MBMS service, immediately returning a setup failure message to said core network.

7. A Drift Radio Network Controller, DRNC, and said DRNC adapted for:
when a User Equipment, UE, which is in a non CELL_DCH state, moves from a Serving Radio Network Controller, SRNC, controlled area to a Drift Radio Network Controller, DRNC, controlled cell, receiving a CELL UPDATE message sent by the UE, and sending an uplink signaling transfer indication message to a Serving Radio Network Controller, SRNC, to notify cell change information of the UE to the SRNC, wherein the uplink signaling transfer indication message includes Multimedia Broadcast Multicast Service, MBMS, service supporting capability indication information of the DRNC controlled cell.

8. The DRNC as claimed in claim 7, wherein
the MBMS service supporting capability indication information is written into a Cell Capability Container Frequency Division Duplex, FDD, information element of the uplink signaling transfer indication message or the radio link setup response message or the radio link addition response message.

## Patentansprüche

1. Verfahren zum Transferieren einer Zellenkapazität über eine Iur-Schnittstelle aufweisend:
wenn sich ein User Equipment, UE, welches sich in einem Nicht-CELL-DCH-Status befindet, von einem Server Radio Network Controller, SRNC-kontrollierten Bereich zu einer von einem Drift Radio Network Controller, DRNC-kontrollierten Zelle wegbewegt, sendet das UE eine CELL UPDATE-Nachricht zu einem DRNC;
der DRNC schickt eine Uplink-Signaltransfer-Anzeigenachricht an einen SRNC, um dem SRNC die Änderung der Zelleninformation des UEs zu melden, wobei die Uplink-Signaltransfer-Anzeigenachricht einen Multimedia Broadcast Multicast Service, MBMS beinhaltet, welcher die Kapazitätsanzeigeinformation der DRNC-kontrollierten Zelle unterstützt.

2. Verfahren gemäß Anspruch 1, wobei
die MBMS unterstützende Kapazitätsanzeigeinformation in ein Cell Capability Container Frequency Division Duplex, FDD, Informationselement der Uplink-Signaltransfer-Anzeigenachricht oder Funkverbindung-Aufbau-Antwortnachricht oder in die Funkverbindung-Ergänzung-Antwortnachricht geschrieben wird.

3. Verfahren gemäß Anspruch 1, weiter aufweisend
der SRNC sendet unmittelbar eine Aufbaufehlermeldung an das besagte Kernnetzwerk zurück, nachdem der SRNC die MBMS-Service unterstützende Kapazitätsanzeige-Information von der DRNC-kontrollierten Zelle erhalten hat und wenn der derzeitige Zustand des UE eine Zelle beinhaltet, die MBMS-Service nicht gestattet und ein Kernnetzwerk anordnet einen MBMS-Service aufzubauen.

4. System zum Transferieren einer Zellenkapazität über eine Iur-Schnittstelle, welches einen Driftradio Network Controller, DRNC, und einen Server Radio Network Controller, SRNC, aufweist, wobei:
der DRNC geeignet ist, eine CELL UPDATE-Nachricht zu empfangen, die von einem User Equipment, UE, versendet wurde, und dem SRNC eine Uplink-Signaltransfer-Anzeigenachricht zusenden, wenn sich das UE, welches sich in einem Nicht-CELL-DCH-Status befindet, von einem SRNC-kontrollierten Bereich zu einer DRNC-kontrollierten Zelle wegbewegt, wobei die Uplink-Signaltransfer-Anzeigenachricht einen MBMS-Service beinhaltet, welcher die Kapazitätsanzeigeinformation der DRNC-kontrollierten Zelle unterstützt; und
der SRNC ist geeignet, die Funkverbindung-Aufbau-Antwortnachricht zu empfangen, um den MBMS-Service der DRNC-kontrollierten Zelle zu erhalten.

5. System gemäß Anspruch 4, wobei
die MBMS-Service unterstützende Kapazitätsanzeigeinformation in ein Cell Capability Container Frequency Division Duplex, FDD, Informationselement der Uplink-Signaltransfer-Anzeigenachricht oder der Funkverbindung-Aufbau-Antwortnachricht oder der Funkverbindung-Ergänzung-Antwortnachricht geschrieben wird.

6. System gemäß Anspruch 4, wobei der SRNC geeignet ist, unmittelbar eine Aufbaufehlermeldung an das Kernnetzwerk zurückzusenden, nachdem der SRNC die MBMS-Service unterstützende Kapazitätsanzeigeinformation der DRNC-kontrollierten Zelle erhalten hat und der derzeitige Zustand des UE eine Zelle beinhaltet, die MBMS-Service nicht gestattet und ein Kernnetzwerk anordnet, MBMS-Service aufzubauen.

7. Drift Radio Network Controller, DRNC, geeignet um: eine Zellenupdate-Nachricht, die von einem UE gesendet wurde, zu empfangen und eine "Uplink-Signaltransfer-Anzeigenachricht an einen Server Radio Network Controller, SRNC, zu senden, um dem SRNC die Änderung der Zelleninformation des UE zu melden, wenn sich das UE, welches in einem Nicht-CELL-DCH-Status ist, von einem SRNC-kontrollierten Bereich zu einer DRNC-kontrollierten Zelle wegbewegt, wobei die Uplink-Signaltransfer-Anzeigenachricht einen Multimedia Broadcast Multicast Service (MBMS) beinhaltet, welcher die Kapazitätsanzeigeinformation der DRNC-kontrollierten Zelle unterstützt.

8. DRNC gemäß Anspruch 7, wobei
die MBMS-Service unterstützende Kapazitätsanzeigeinformation in ein Cell Capability Container Frequency Division Duplex FDD Informationselement der Uplink-Signaltransfer-Anzeigenachricht oder der Funkverbindung-Aufbau-Antwortnachricht oder der Funkverbindung-Ergänzung-Antwortnachricht geschrieben wird.

## Revendications

1. Procédé de transfert d'une capacité cellulaire à travers une Interface Iur, comprenant les étapes ci-dessous dans lesquelles :
lorsqu'un équipement d'utilisateur, UE, lequel est dans un état « non CELL_DCH », se déplace d'une zone commandée par contrôleur de réseau radio de desserte, SRNC, vers une cellule commandée par contrôleur de réseau radio de dérive, DRNC, l'équipement UE envoie un message de mise à jour de cellule « CELL UPDATE » à un contrôleur DRNC ;
le contrôleur DRNC envoie un message d'indication de transfert de signalisation en liaison montante à un contrôleur SRNC en vue de notifier des informations de changement de cellule de l'équipement UE au contrôleur SRNC, dans lequel le message d'indication de transfert de signalisation en liaison montante inclut des informations d'indication de capacités de prise en charge de service pour un service de radiodiffusion multimédia multidestinataire, MBMS, de la cellule commandée par contrôleur DRNC.

2. Procédé selon la revendication 1, dans lequel :
les informations d'indication de capacités de prise en charge de service MBMS sont écrites dans un élément d'information de duplexage par répartition de la fréquence, FDD, de conteneur de capacité cellulaire du message d'indication de transfert de signalisation en liaison montante, ou du message de réponse d'établissement de liaison radio, ou encore du message de réponse d'ajout de liaison radio.

3. Procédé selon la revendication 1, comprenant en outre l'étape ci-dessous dans laquelle :
suite à l'obtention, par le contrôleur SRNC, des informations d'indication de capacités de prise en charge de service MBMS de la cellule commandée par le contrôleur DRNC, si l'ensemble actif en cours de l'équipement UE inclut une cellule n'autorisant pas le service MBMS, et si un réseau central ordonne l'établissement du service MBMS, ledit contrôleur SRNC renvoie immédiatement un message d'échec d'établissement audit réseau central.

4. Système pour transférer une capacité cellulaire à travers une Interface Iur, comprenant un contrôleur de réseau radio de dérive, DRNC, et un contrôleur de réseau radio de desserte, SRNC, dans lequel :
ledit contrôleur DRNC est apte à, lorsqu'un équipement d'utilisateur, UE, lequel est dans un état « non CELL_DCH », se déplace d'une zone commandée par contrôleur SRNC vers une cellule commandée par contrôleur DRNC, recevoir un message de mise à jour de cellule « CELL UPDATE » envoyé par l'équipement UE, et envoyer un message d'indication de transfert de signalisation en liaison montante audit contrôleur SRNC, en vue de notifier des informations de changement de cellule de l'équipement UE au contrôleur SRNC, dans lequel le message d'indication de transfert de signalisation en liaison montante inclut des informations d'indication de capacités de prise en charge de service pour un service de radiodiffusion multimédia multidestinataire, MBMS, de la cellule commandée par contrôleur DRNC ; et
ledit contrôleur SRNC est apte à recevoir le message d'indication de transfert de signalisation en liaison montante en vue d'obtenir les informations d'indication de capacités de prise en charge de service MBMS de la cellule commandée par contrôleur DRNC.

5. Système selon la revendication 4, dans lequel :
les informations d'indication de capacités de prise en charge de service MBMS sont écrites dans un élément d'information de duplexage par répartition de la fréquence, FDD, de conteneur de capacité cellulaire du message d'indication de transfert de signalisation en liaison montante, ou du message de réponse d'établissement de liaison radio, ou encore du message de réponse d'ajout de liaison radio.

6. Système selon la revendication 4, dans lequel ledit contrôleur SRNC est en outre apte à :
suite à l'obtention, par le contrôleur SRNC, des informations d'indication de capacités de prise en charge de service MBMS de la cellule commandée par le contrôleur DRNC, si l'ensemble actif en cours de l'équipement UE inclut une cellule n'autorisant pas le service MBMS, et si un réseau central ordonne l'établissement du service MBMS, renvoyer immédiatement un message d'échec d'établissement audit réseau central.

7. Contrôleur de réseau radio de dérive, DRNC, et contrôleur DRNC, aptes à :
lorsqu'un équipement d'utilisateur, UE, lequel est dans un état « non CELL_DCH », se déplace d'une zone commandée par contrôleur de réseau radio de desserte, SRNC, vers une cellule commandée par contrôleur de réseau radio de dérive, DRNC, recevoir un message de mise à jour de cellule « CELL UPDATE » envoyé par l'équipement UE, et envoyer un message d'indication de transfert de signalisation en liaison montante à un contrôleur de réseau radio de desserte, SRNC, en vue de notifier des informations de changement de cellule de l'équipement UE au contrôleur SRNC, dans lequel le message d'indication de transfert de signalisation en liaison montante inclut des informations d'indication de capacités de prise en charge de service pour un service de radiodiffusion multimédia multidestinataire, MBMS, de la cellule commandée par contrôleur DRNC.

8. Contrôleur DRNC selon la revendication 7, dans lequel :
les informations d'indication de capacités de prise en charge de service MBMS sont écrites dans un élément d'information de duplexage par répartition de la fréquence, FDD, de conteneur de capacité cellulaire du message d'indication de transfert de signalisation en liaison montante, ou du message de réponse d'établissement de liaison radio, ou encore du message de réponse d'ajout de liaison radio.
